# EUROPEAN PATENT APPLICATION

(11) **EP 4 535 265 A1**
(43) Date of publication of application: **09.04.2025**
(21) Application number: 23202068.5
(22) Date of filing: 06.10.2023
(51) Int. Cl.: G06Q 20/22, G06Q 20/32, G06Q 20/38, G06Q 20/42, G06Q 20/08

(54) **SECURE TRANSACTION UNIT, ELECTRONIC TRANSACTION SYSTEM, METHOD FOR PROVIDING A TRANSACTION**

(71) Applicant: Giesecke+Devrient advance52 GmbH, 81677 München (DE)
(72) Inventor: HUPEL, Lars, 81677 München (DE)
(74) Representative: Ter Meer Steinmeister & Partner

(57) **Abstract**

The invention relates to a secure transaction unit for receiving transactions from another secure transaction unit in an electronic payment transaction system, the secure transaction unit comprises: means for transmitting communication registration data to a remote connecting unit for registering the secure transaction unit at the remote connecting unit via a first communication channel; means for transmitting a request for transaction to the other secure transaction unit via a second communication channel, wherein the request for transaction comprises an identification information; means for receiving information from the remote connecting unit for establishing a direct communication channel to the other secure transaction unit; means for receiving transaction from the other secure transaction unit via the direct communication channel.

## Description

The invention relates to a secure transaction unit. The invention also refers to another secure transaction unit. The invention also relates to an electronic transaction system. The invention also relates to a method for providing a transaction between another secure transaction unit to a secure transaction unit in an electronic transaction system.

Electronic transactions, such as electronic payment transactions, can be made on an account-based model or a token-based model. A transaction in the account-based model triggers nodes to decrement the balance of the payer's account and increment the balance of the payee's account. Alternatively, in a token-based model, tokens are directly (or indirectly) transferred between payer and payee, e.g. using electronic wallets etc.. Both models are applicable within this disclosure.

Tokens - also referred to as digital assets, electronic coins, coin data sets - may represent any digital asset, in particular a digital currency, preferably a central bank digital currency, short CBDC. These tokens are issued and deleted by an issuing unit of a token transaction system, such as an issuing authority, or a central bank unit or a commercial bank unit, hereinafter also referred to as secure token issuing unit.

There are different technical approaches for exchanging electronic tokens such as a digital asset e.g., digital currency such as CBDC, issued by a central bank within the electronic tokens transaction system.

Electronic token transactions and/or storage of tokens and any associated transaction data and/or storage data in an electronic transaction system must be safe, secure, and so, means for protecting confidentiality, privacy, integrity, and availability of exchanged and/or stored token data must be implemented. This is especially true for electronic payment transactions and associated payment transactions and payment storages in which a monetary value is linked with each token.

In conventional transaction systems, online communication channels or offline communication channels are used for transferring tokens from a first participant, e.g. a payer, to a second participant, e.g. a payee, wherein offline communication channels are preferred. The participants must establish a secure communication channel for token transactions and therefore both participants must know each other or at least know how to reach each other. Known systems assume that two participants find each other automatically. For instance, offline communication channels may be established between any participant based on NFC or Bluetooth having a spatial range between a few centimeters and up to 10 meters, i.e. in NFC or Bluetooth range, to assure that the other participant - in that close vicinity, which high probably is the only available participant - is the correct participant for the planned token transaction. Therefore, based on security reasons and the used technical connections, nowadays tokens between unknown participants communication channels can only be exchanged in a short spatial distance. There is a need for token transactions between any participant having a spatial range of more that the range of NFC and Bluetooth and fulfilling secure requirements. For instance, long distance token transactions of several kilometers between any known or unknown participant should be possible. In particular, a peer-to-peer, P2P, transaction should be possibly, having a direct communication between terminals, wherein the wallets are unhosted (not hosted).

The above-identified objectives are solved with the features of the independent patent claims. Further advantageous embodiments are described in the dependent patent claims.

In an aspect of the present invention, there is provided a secure transaction unit for receiving transactions from another secure transaction unit in an electronic transaction system.

The secure transaction unit comprises: means for transmitting communication registration data to a remote connecting unit for registering the secure transaction unit at the remote connecting unit via a first communication channel; means for transmitting a request for transaction to the other secure transaction unit via a second communication channel, wherein the request for transaction comprises identification information; means for receiving information from the remote connecting unit for establishing a direct communication channel to the other secure transaction unit; and means for receiving transaction from the other secure transaction unit via the direct communication channel.

Secure transaction units, also referred to as secure wallets, secure token management units; token wallets; and/or wallets may be used to locally manage token in a secure element, i.e. a smart card, itself and/or to modify the tokens and to register the token in the electronic transaction system. The token may be stored in a token storage that is also managed by the token-wallet.

Secure transaction units may be software-based or hardware-based and can be used to store a variety of information, including tokens, asset values, credit card numbers, loyalty card numbers, boarding pass numbers and other relevant data. A secure transaction unit can be implemented as a software application within a terminal device of the participant (so-called device-wallet), or as a hardware device, such as a USB drive or a smartcard / chipcard (so-called secure element), or as a hosted-wallet, hosted at a service provider of the participant to which platform the participant needs to connect, also referred to as online-wallets. The secure transaction unit may provide token based or account based transactions.

The communication registration data may represent any data being provided to the remote connecting unit by the secure transaction unit and/or the other secure transaction unit for registering the secure transaction unit and/or the other secure transaction unit at the remote connecting unit. In other words, the communication registration data may represent any data that may be used to locate the secure transaction unit or the other secure transaction unit in a network for establishing a network connection, preferably a UDP/IP or TCP/IP connection. For instance, the communication registration data may comprise an address, preferably an IP-address, an online transaction unit address and/or a hardware/offline transaction unit address of the secure transaction unit and the other secure transaction unit and/or identification information identifying the secure transaction unit and/or the other secure transaction unit, but is not limited thereto. The communication registration data may be stored in a memory or database or register of the remote connecting unit. The communication registration data may be provided as an integer, a string or a combination thereof.

The remote connecting unit represents any unit providing, i.e. initiating brokering, imparting or moderating, a connection between a secure transaction unit and another secure transaction unit. In other words, the remote connecting unit only provides and/or manages a connection between the secure transaction unit and the other secure transaction unit but does not execute, affect, or interfere with the transaction between the other secure transaction unit and the secure transaction unit in an electronic transaction system. Such a remote connecting unit is a point of contact within or external from the transaction system to enable a participant to establish a secure communication channel with any other participant for a later transaction also over very long distances. For instance, the remote connecting unit may be a rendezvous- server, but is not limited thereto. The remote connecting unit may include one or a plurality of identical or different rendezvous-server. The remote connecting unit may include a memory, a database, or a register for storing the communication registration data provided by the secure transaction unit and/or the other secure transaction unit. The memory, the database or the register may be arranged internally or externally to the remote connecting unit. The remote connecting unit or each one of the remote connecting units may comprise an address, in particular an IP-address, and/or an identification information of the remote connecting unit. The address and/or identification information of the connecting server should be unique within the transaction system. A combination of at least one of them or both (i.e. address, and/or identification information of the remote connecting unit) may represent the information about the remote connecting unit. For instance, the identification information of the remote connecting unit may be a pseudonym or a name of the remote connecting unit, but is not limited thereto. The identification information of the remote connecting unit may be represented as an integer, a string, or a combination thereof, but is not limited thereto. The remote connecting unit(s) may be decentral arranged at a plurality of different entities with the transaction system, such as commercial banks or may be central arranged with the transaction system, e.g. as a further element in the transaction system or at a central bank unit or at reference register, i.e. a verifier.

The received information from the remote connecting unit of the other secure transaction unit represent any information enabling/establishing a direct communication channel to the other secure transaction unit. The information from the remote connecting unit of the other secure transaction unit may comprise a communication address of the other secure transaction unit, but is not limited thereto.

Using a first communication channel, communication registration data may be provided respectively transmitted by the secure transaction unit and/or the other secure transaction unit to the remote connecting unit. Additionally, by the first communication channel, the request for initiating a connection between the other secure transaction unit and the secure transaction unit may be transmitted form the other secure transaction unit to the remote connecting unit. The first communication channel may be peer-to-peer, P2P, protocol like WebRTC, Session Initiation Protocol (SIP), Session Traversal Utilities for NAT (STUN), Traversal Using Relays around NAT (TURN), and Interactive Connectivity Establishment (ICE), but is not limited thereto.

Using a second communication channel, a request for transaction is transmitted from the secure transaction unit to the other secure transaction unit. The second communication channel may be an out-of-band communication channel. For instance, the second communication channel may be E-Mail, SMS, MMS, Instant Messenger or fax, but is not limited thereto. As out-of-band channel, the exchange of the request for transaction in a separate band from the first communication or the direct communication channel is meant, being a separate, dedicated channel for just exchanging these request for transaction information.

Using a direct communication channel, a transaction is provided respectively transmitted from the other secure transaction unit to the secure transaction unit. The direct communication channel may be a transmission control Protocol, TCP, channel and/or a Hardware-Transfer-Protocol, in particular a known Hardware-Transfer-Protocol, but is not limited thereto. The direct communication channel may be different from the second communication channel.

The direct communication channel may be different to the first communication channel.

The first communication channel may be different to the second communication channel.

The direct communication channel may be configured to be a communication channel providing a stable and secure connection between both secure transaction units, i.e. ensuring a reliable connection, such that no loss of data packages may appear. This direct communication channel may be a secure communication channel, also referred to as cryptochannel, secure communication, and the like, that may be cryptographically secured. This direct communication channel may be based on an Internet Protocol (IP), a Transmission Control Protocol (TCP), User Datagram Protocol (UDP), and Stream Control Transmission Protocol (SCTP), but is not limited thereto.

The request for transaction may represent any request, any query, or any question for providing a transaction. The request for transaction is transmitted from the secure transaction unit to the other secure transaction unit via the second communication channel. The request for transaction comprises an identification information. The request for transaction may be a link being presented as a two-dimensional optical code, such as a QR-code, as a one-dimensional optical code, such as barcode, or as an optical illustration, such as a drawing or figure, but is not limited thereto. Alternatively, the request for transaction may be presented as an address list.

The identification information may represent any information identifying, providing an identification and/or allowing an identification of the secure transaction unit or the other secure transaction unit. In other words, the identification information may be any information leading to a specific and clear assignment of any information, respectively data, to these units. The identification information may be uniquely assigned to the individual transaction unit within the transaction system. For instance, the identification information comprising at least one or more of: a communication address of the remote connecting unit, preferably information about the remote connecting unit to which secure transaction unit transmits the communication registration data; and/or identification information identifying the secure transaction unit, preferably a unique transaction unit identifier, a name, a pseudonym and/or a key pair including a private and a public key; and/or information about the transaction, preferably a monetary value of the transaction to be received by the secure transaction unit; a transaction identifier; a signed unique transaction identifier; and/or the public key of the identification information identifying the secure transaction receipt unit; and/or a channel identifier of the direct communication channel. Exemplarily, the identification information identifying the secure transaction unit and the other secure transaction unit may be a name, a pseudonym and/or a key pair, but is not limited thereto. The key pair includes a private and a public key. The key, in particular the public key part of the key pair may be generated specifically for a transaction or for a plurality of transactions, but is not limited thereto. Alternatively, or additionally, the identification information identifying the secure transaction unit and the other secure transaction unit may include a unique transaction unit identifier, i.e. a wallet-ID, or a signed unique transaction unit identifier, i.e. a signed wallet-ID, but is not limited thereto. The signed unique transaction unit identifier may be signed by a unique transaction unit identifier certificate, but is not limited thereto. The public key of the key pair may be part of that certificate. The identification information of the secure transaction unit and the other secure transaction unit can be identical or different. The identification information may be provided as an integer, a string or a combination thereof. The identification information may further represent any information about the planned transaction. For instance, the identification information may be the monetary value of the transaction to be received by the secure transaction unit. Further, the identification information may provide information about the type of the transaction, e.g. money or digital asset, such as a contract or company share, but is not limited thereto. Optionally, the identification information further includes a unique transaction identifier, i.e. a transaction ID or a signed unique transaction identifier, i.e. signed transaction ID. The signed unique transaction identified may be signed by the public key of the secure transaction unit.

With this aspect, it is assured that an offline communication channel and transaction can be provided having an unlimited, i.e. greater than 100 meter, spatial range while the secure requirements needed for a safe transaction are fulfilled.

In a preferred embodiment of the secure transaction unit for receiving transactions from another secure transaction unit, the received information for establishing a direct communication channel includes a communication address of the other secure token transaction unit.

In a preferred embodiment of the secure transaction unit for receiving transactions from another secure transaction unit, the identification information comprising at least one or more of: a communication address of the remote connecting unit, preferably information about the remote connecting unit to which secure transaction unit transmits the communication registration data; and/or identification information identifying the secure transaction unit, preferably a unique transaction unit identifier, a name, a pseudonym and/or a key pair including a private and a public key; and/or information about the transaction, preferably a monetary value of the transaction to be received by the secure transaction unit; a transaction identifier; a signed unique transaction identifier; and/or the public key of the identification information identifying the secure transaction receipt unit; and/or a channel identifier of the direct communication channel.

By including information about the remote connecting unit into the request for transaction and therefore providing information about the remote connecting unit to the other secure transaction unit, the establishment of a connection between the other secure transaction unit and the remote connecting unit can be simplified. Specifically, since the secure transaction unit receives the information about the remote connecting unit, in particular the IP-address of the remote connecting unit, a search for the remote connecting unit by the other secure transaction unit is not necessary, because the other secure transaction unit knows to which remote connecting unit the other secure transaction unit has to register and has to transmit a request for initiating a connection. Further, a connection to a correct remote connecting unit can be ensured and a connection to a wrong remote connecting unit, i.e. another not usable remote connecting unit, is reliable prevented. This is fundamentally relevant when there are a large number of different remote connecting units.

Using a pseudonym disguises the identity of the secure transaction unit and/or the other secure transaction unit and therefore the owner of the secure transaction unit and/or the other secure transaction unit. Hence, the transaction between the secure transaction unit and the other secure transaction unit can be provided in accordance with telecommunications data protection ordinance.

In a preferred embodiment of the secure transaction unit for receiving transactions from another secure transaction unit, the direct communication channel is different from the second communication channel and/or wherein the first communication channel is different from the second communication channel and the direct communication channel.

In a preferred embodiment of the secure transaction unit for receiving transactions from another secure transaction unit, the communication registration data being transmitted by the secure transaction unit to the remote connecting unit comprises a communication address, preferably an IP-address, an online transaction unit address and/or a hardware transaction unit address of the secure transaction unit.

For instance, the online transaction unit address may be an address including an identifier of a service provider unit at which the online transaction unit (also referred to as online-wallet or hosted-wallet). The address may be in the form of "wallet:myfsp.com:12345", but is not limited thereto. The expression "myfsp" is an identifier for the service provider unit at which the wallet is hosted. A hardware/ offline transaction unit address may be an address including a serial number of a hardware component, such as a secure element number or chip number, e.g. in the form of "0x1234abcd".

The use of a combination of an online transaction unit address and a hardware transaction unit address, i.e. a so called hybrid address, enables that the other secure transaction unit can choose to provide the transaction online or offline, i.e. by a Hardware-Transfer-protocol.

In a preferred embodiment of the secure transaction unit for receiving transactions from another secure transaction unit, the request for transaction is presented as a QR-code, barcode, or figure and/or the second communication channel comprises E-Mail, SMS, MMS, Instant Messenger, or fax.

By providing the request for transaction in a QR-code, barcode, or figure, the spread of the request for transaction can be simplified and it is enabled that the request for transaction can be transmitted via E-Mail, SMS, MMS, Instant Messenger or fax communication.

In another aspect of the invention there is provided a secure transaction unit for transmitting transactions to another secure transaction unit in an electronic transaction system, the secure transaction unit comprises: means for receiving a request for transaction from the other secure transaction receipt unit via a second communication channel, wherein the request for transaction comprises an identification information; means for transmitting communication registration data to the remote connecting unit for registering the secure transaction unit at the remote connecting unit; means for transmitting a request for initiating a connection between the secure transaction unit and the other secure transaction unit via a direct communication channel to the remote connecting unit; means for receiving information from the remote connecting unit for establishing the direct communication channel to the other secure transaction unit; and means for providing transactions to the transaction unit via the direct communication channel.

The request for initiating a connection may represent any request, any query or any question for providing respectively initiating a direct connection between the secure transaction unit and the other secure transaction unit. The request for initiating a connection may be transmitted from the secure transaction unit to the remote connecting unit via the first communication channel. For instance, the request for initiating a connection includes one of the following; identification information identifying the secure transaction unit, preferably a unique transaction unit identifier, a name, a pseudonym and/or a key pair including a private and a public key; and/or information about the transaction, preferably a monetary value of the transaction to be received by the secure transaction unit; a transaction identifier; a signed unique transaction identifier; and/or the public key of the identification information identifying the secure transaction receipt unit; and/or a channel identifier of the direct communication channel, but is not limited thereto.

In a preferred embodiment of the secure transaction unit for transmitting transactions to another secure transaction unit, the communication registration data being transmitted by the secure transaction unit to the remote connecting unit comprises an address, preferably an IP-address and/or identification information identifying the secure transaction unit and/or the received information from the remote connecting unit of the other secure token transaction unit includes an address of the other secure token transaction unit.

In a preferred embodiment of the secure transaction unit for transmitting transactions to another secure transaction unit, the request for initiating a connection comprises at least one or more of: identification information identifying the secure transaction unit, preferably a unique transaction unit identifier, a name, a pseudonym and/or a key pair including a private and a public key; and/or information about the transaction, preferably a monetary value of the transaction to be received by the secure transaction unit; a transaction identifier; a signed unique transaction identifier; and/or the public key of the identification information identifying the secure transaction receipt unit; and/or a channel identifier of the direct communication channel.

In another aspect of the invention there is provided an electronic transaction system comprising: one or more secure transaction unit as described above; one or more other secure transaction unit as described above; one or more remote connecting unit, wherein the remote connecting unit comprises: means for receiving communication registration data from the secure transaction unit; means for receiving communication registration data from the other secure transaction unit; means for receiving a request for initiating a connection between the other secure transaction unit and the other secure transaction unit; means for providing information of the secure transaction unit to the other secure transaction unit and for providing information of the other secure transaction unit to the secure transaction unit for establishing a direct communication channel between the secure transaction unit and the other secure transaction unit.

In a preferred embodiment of the electronic transaction system, the one or more remote connecting unit comprises a rendezvous-server, and/or when comprising more than one remote connecting units, the request for transaction further comprises a communication address, preferably IP-address, of one remote connecting unit selected from the remote connecting units, and/or wherein the communication address of the remote connecting unit is fix or variable (flexible).

In this context, the communication address of the remote connecting unit is fix when the communication address is once provided from the remote connecting unit or the secure transaction unit. When the communication address is fixed, this communication address is always used and no communication address updates regarding the communication address are provided from this transaction unit. In other words, the transaction unit always uses this communication address.

In this context, the communication address of the remote connecting unit is variable (flexible) when it is generated respectively provided for each transaction by the secure transaction unit or the remote connecting unit. The communication address may be based on a session of the transaction unit or on a session of the remote connecting unit informing the secure transaction unit.

In another aspect of the invention there is provided a method for providing a transaction between another secure transaction unit as described above to a secure transaction unit as described above, in an electronic transaction system, the method comprises: providing communication registration data from the secure transaction unit to the remote connecting unit for registering the secure transaction unit at the remote connecting unit via a first communication channel; providing a request for transaction from the secure transaction unit to the other secure transaction unit via a second communication channel, wherein the request for transaction comprises an identification information; when the other secure transaction unit has received the request for transaction from a secure transaction unit, providing communication registration data from the other secure transaction unit to the remote connecting unit for registering the other secure transaction unit at the remote connecting unit and providing a request for initiating a connection via a direct communication channel between the other secure transaction unit and the secure transaction unit from the other secure transaction unit to the remote connecting unit; providing information of the secure transaction unit to the other secure transaction unit by the remote connecting unit; providing information of the other secure transaction unit to the secure transaction unit by the remote connecting unit; establishing a direct communication channel between the secure transaction unit and the other secure transaction unit based on the provided information by the remote connecting unit; and providing transactions from the other secure transaction unit to the secure transaction unit via the direct communication channel.

The establishing of a direct communication channel between the secure transaction unit and the other secure transaction unit may be based on the respective information provided by the remote connecting unit. For instance, when the communication registration data of the secure transaction unit, in particular the identification information of the secure transaction unit being provided to the remote connecting unit, and the identification information of the secure transaction unit being provided to the remote connecting unit by the other secure transaction unit as the request of initiating, these information can be used to establish the direct communication channel. Alternatively, the establishing of a direct communication channel can be provided by a proxy.

In a preferred embodiment of the method, when the remote connecting unit comprises more than one remote connecting unit, selecting one remote connecting unit of the remote connecting units by the secure transaction unit, transmitting the communication registration data of the secure transaction unit to the selected remote connecting unit, and providing a communication address of the selected remote connecting unit to the other secure transaction unit with the request for transaction; and/or providing the request for transaction as a QR-code, barcode, or figure. When a loss of the direct communication channel is identified by the secure transaction unit and/or the other secure transaction unit, the method further comprises the steps of providing again the request for initiating a connection from the other secure transaction unit to the remote connecting unit; providing again information including of the secure transaction unit to the other secure transaction unit by the remote connecting unit; providing again information of the other secure transaction unit to the secure transaction unit by the remote connecting unit; establishing again the direct communication channel between the secure transaction unit and the other secure transaction unit based on the provided information by the remote connecting unit; and providing again the transaction from the other secure transaction unit to the secure transaction unit via the direct communication channel.

In a preferred embodiment of the method, the method further comprises the step of verifying the established direct communication channel.

The verification of the established direct communication channel may be provided before the transaction from the other secure transaction unit to the secure transaction unit is provided.

In a first exemplary method for verifying the established direct communication channel, a signed transaction unit identifier is used for the verification. The basic requirement for the verification based on the signed transaction unit identifier is that both, the communication registration data of the secure transaction unit and the request for transaction being provided from the secure transaction unit to the other secure transaction unit include a signed transaction unit identifier being signed with a transaction unit certificate of the secure transaction unit. Since, the remote connecting unit receives a signed transaction unit identifier and also the other secure transaction unit receives a signed transaction unit identifier, the other secure transaction unit can verify if the remote connecting unit will establish a connection to the secure transaction unit being the owner of the signed transaction unit identifier.

In a second exemplary method for verifying the established direct communication channel, a key pair is used for the verification. The basic requirement for the verification based on the key pair is that the communication registration data of the secure transaction unit includes a private key of the key pair, such that the private key is stored respectively provided to the remote connecting unit, and that the request for transaction includes a public key of the key pair, such that the public key is provided to the other secure transaction unit. Since, the remote connecting unit includes the private key and the other secure transaction unit includes the public key and transmits this public key in the request for initiating a communication to the remote connecting unit, the remote connecting unit can verify that the request for initiating a communication is valid and approved by the secure transaction unit.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a first secure electronic transaction system for transactions with secure transaction units of the prior art.
Fig. 2 shows a second secure electronic transaction system for transactions with secure transaction units of the prior art.
Fig. 3 shows an exemplary embodiment of the secure transaction unit according to the invention.
Fig. 4 shows an exemplary embodiment of the other secure transaction unit according to the invention.
Fig. 5 shows an exemplary embodiment of a secure electronic payment transaction system.
Fig. 6 shows another exemplary embodiment of a method for providing transaction between another secure transaction unit and the secure transaction unit.

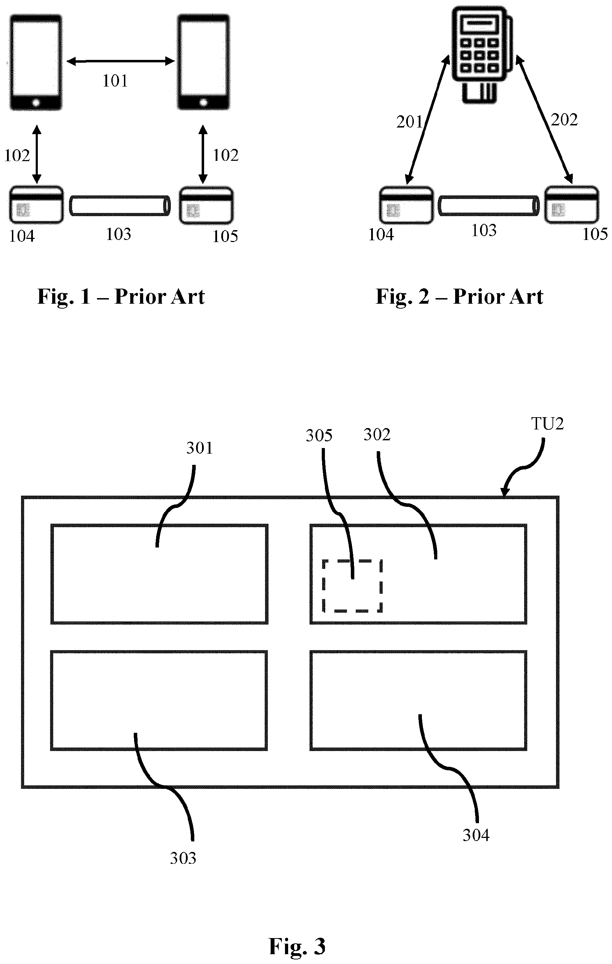

Figs. 1 and 2 show a first secure electronic payment transaction system and a second electronic payment transaction system for transactions with secure transaction units of the prior art.

In Fig. 1, a secure electronic payment transaction system using smartphones as an offline communication channel is depicted. A secure electronic payment transaction is established, when each user, i.e. the payer 104 and the payee 105, verifies a smart card via NFC or Bluetooth etc. 102 by the smartphone in order to provide respectively establish a secure channel 103 between both smart cards. Both smartphones are connected to each other by Wi-Fi-direct Bluetooth 101. Therefore, this first secure electronic payment transaction system only establishes a secure channel 103 when both users are in near spatial contact i.e. less than 10 meters. In Fig. 2, a secure electronic payment transaction system using a payAnywhere device for offline communication is depicted. A payAnywhere device may represent any mobile card reader for secure transaction units, especially smart cards, such as payment cards, but is not limited thereto. A secure electronic payment transaction is established, when each user, i.e. the payer 104 and the payee 105, verifies a smart card by NFC contact based 201, NFC contactless 202 or Bluetooth etc. by a payAnywhere device in order to provide respectively establish a secure channel 103 between both smart cards. Therefore, this second secure electronic payment transaction system also only establishes a secure channel 103 when both users are in near special contact i.e. less than 10 meters.

Fig. 3 shows an exemplary embodiment of the secure transaction unit according to the invention. The secure transaction unit TU2 comprises means 301 configured for transmitting communication registration data to a remote connecting unit CU capable for registering the secure transaction unit TU2 at the remote connecting unit CU, means 302 configured for transmitting a request for transaction to the other secure transaction unit TU1. The means 301 configured for transmitting communication registration data to a remote connecting unit CU transmits the communication registration data to the remote connecting unit CU with a first communication channel and the means 302 configured for transmitting a request for transaction transmits the request for transaction to the other secure transaction unit TU1 via a second communication channel. The secure transaction unit TU2 further comprises means 303 configured for receiving information from the remote connecting unit CU and means 304 configured for receiving transaction from the other transaction unit TU1 via the direct communication channel. Optionally, the means 302 configured for transmitting a request for transaction comprises a request providing unit 305 configured for providing the request for transaction as a QR-code, a barcode, or a figure.

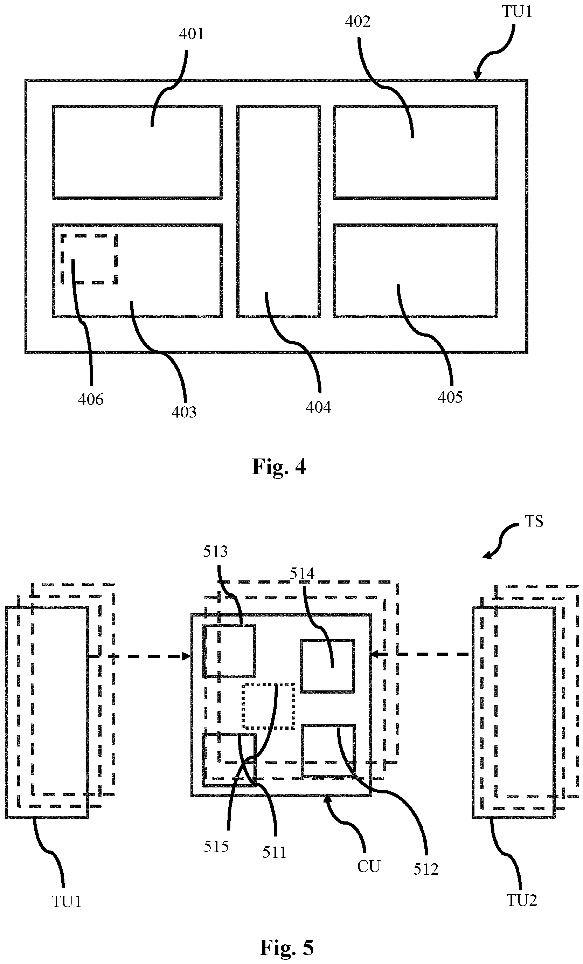

Fig. 4 shows an exemplary embodiment of the other secure transaction unit according to the invention. The secure transaction unit TU1 comprises means 401 configured for receiving a request for transaction from the other secure transaction receipt unit TU2, means 402 configured for transmitting communication registration data to the remote connecting unit CU configured for registering the secure transaction unit TU1 at the remote connecting unit CU, and means 403 configured for transmitting a request for initiating a connection between the secure transaction unit TU1 and the other secure transaction unit TU2 to the remote connecting unit CU. Optionally, the means 403 configured for transmitting a request for initiating a connection comprises a request providing unit 406 configured for providing the request for initiating a connection. The secure transaction unit TU1 further comprises means 404 configured for receiving information from the remote connecting unit CU and means 405 configured for providing transactions to the other secure transaction unit TU2.

Fig. 5 shows an exemplary embodiment of a secure electronic payment transaction system TS. The electronic payment transaction system TS comprises one secure transaction unit TU2, one secure transaction unit TU1, and one remote connecting unit CU. As shown in dashed lines, there may be more than one secure transaction unit TU2, more than one secure transaction unit TU1, and more than one remote connecting unit CU. The remote connecting unit CU comprises means 511 configured for receiving communication registration data from the secure transaction unit TU2 and means 512 configured for receiving communication registration data from the other secure transaction unit TU1. The means 511 and 512 can be separated from each other or can be included in the same mean. Further, the remote connecting unit CU comprises means 513 configured for receiving a request for initiating a connection between the other secure transaction unit TU1 and the other secure transaction unit TU2 and means 514 for providing information including a communication address of the secure transaction unit TU2 to the other secure transaction unit TU1 and for providing information including a communication address of the other secure transaction unit TU1 to the secure transaction unit TU2. Optionally, as shown in a pointed line, the remote connecting unit CU comprises a memory 515 for storing the received communication registration data from the secure transaction unit and the other secure transaction unit.

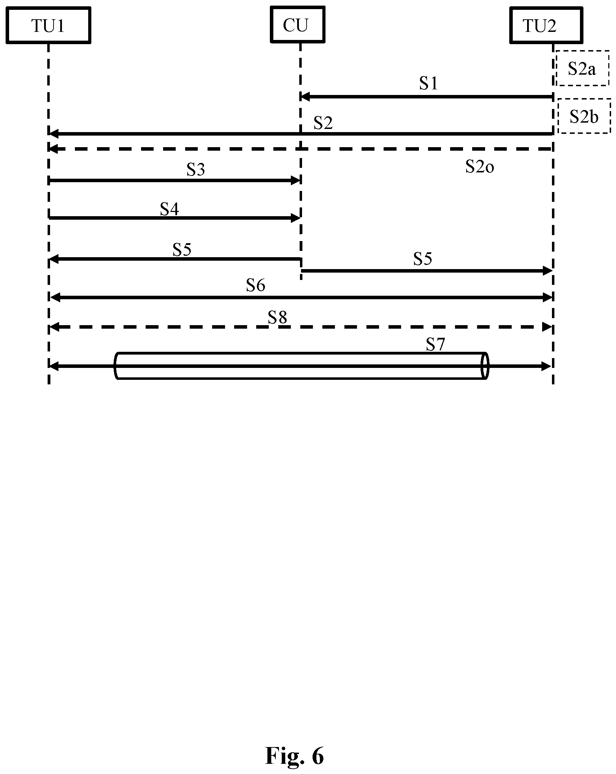

Fig. 6 shows another exemplary embodiment of a method for providing transaction between another secure transaction unit and the secure transaction unit. The method comprises the following steps: In a first step S1, communication registration data are provided respectively transmitted from the secure transaction unit TU2 to the remote connecting unit CU for registering the secure transaction unit TU2 at the remote connecting unit CU via a first communication channel. The transmitted communication registration data from the secure transaction unit TU2 may be stored in the memory of the remote connecting unit CU. In a second step S2, a request for transaction is provided respectively transmitted from the secure transaction unit TU2 to the other secure transaction unit TU1 via a second communication channel. The request for transaction comprises an identification information identifying the secure transaction unit TU2 and information about the transaction. In a third set S3, when the other secure transaction unit TU1 has received the request for transaction from a secure transaction unit TU2, communication registration data from the other secure transaction unit TU1 are provided respectively transmitted to the remote connecting unit CU for registering the other secure transaction unit TU1 at the remote connecting unit CU. The transmitted communication registration data from the other secure transaction unit TU1 may be stored in the memory of the remote connecting unit CU. In a fourth step S4, a request for initiating a connection via a direct communication channel between the other secure transaction unit TU1 and the secure transaction unit TU2 from the other secure transaction unit TU1 is provided respectively transmitted to the remote connecting unit CU. In a fifth step S5 information including a communication address of the secure transaction unit TU2 are provided respectively transmitted from the remote connecting unit CU to the other secure transaction unit TU1 and information including a communication address of the other secure transaction unit TU1 are provided respectively transmitted from the remote connecting unit CU to the secure transaction unit TU2. In a sixth step S6, a direct communication channel is established between the secure transaction unit TU2 and the other secure transaction unit TU1 based on the provided information by the remote connecting unit CU. In a seventh step S7, a transaction from the other secure transaction unit TU1 to the secure transaction unit TU2 is provided via the direct communication channel.

Optionally, the method further comprises an first optional step S2a of selecting, when the remote connecting unit CU comprises more than one remote connecting unit CU, one remote connecting unit CU of the remote connecting units CU by the secure transaction unit TU2, transmitting the communication registration data of the secure transaction unit TU2 to the selected remote connecting unit CU and providing a communication address of the selected remote connecting unit CU to the other secure transaction unit TU1 with the request for transaction. Further, optionally, the method comprises a second optional step S2b of providing the request for transaction as a QR-code, barcode, or figure.

Optionally, the method further comprises, when a loss of the direct communication channel is identified by the secure transaction unit TU1 and/or the other secure transaction unit TU2, a third optional step of providing again the request for initiating a connection from the other secure transaction unit TU1 to the remote connecting unit CU; providing again information including a communication address of the secure transaction unit TU2 to the other secure transaction unit TU1 by the remote connecting unit CU; providing again information including a communication address of the other secure transaction unit TU1 to the secure transaction unit TU2 by the remote connecting unit CU; establishing again the direct communication channel between the secure transaction unit TU2 and the other secure transaction unit TU1 based on the provided information by the remote connecting unit CU; and providing again the transaction from the other secure transaction unit TU1 to the secure transaction unit TU2 via the direct communication channel.

Optionally, the method further comprises the step S8 of verifying the established direct communication channel before the transaction is provided.

### REFERENCE SIGNS

- 101: Wi-Fi-directed Bluetooth
- 102: NFC/Bluetooth
- 103: Secure channel
- 104: Payer
- 105: Payee
- 201: NFC contact-based, Bluetooth
- 202: NFC contactless, Bluetooth
- TU2: Transaction unit in TS, wallet
- 301: Means for transmitting communication registration data
- 302: Means for transmitting a request for transaction
- 303: Means for receiving information from the CU
- 304: Means for receiving transaction
- 305: Request providing unit
- TU1: Transaction unit in TS, wallet
- 401: Means for receiving a request for transaction
- 402: Means for transmitting communication registration data
- 403: Means for transmitting a request for initiating a connection
- 404: Means for receiving information from the CU
- 405: Means for providing a transaction
- 406: Request providing unit
- TS: Electronic (payment) transaction system
- CU: Remote connecting unit
- 511: Means for receiving communication registration data
- 512: Means for receiving communication registration data
- 513: Means for receiving a request for initiating a connection
- 514: Means for providing information
- 515: Memory
- S1: Step 1
- S2: Step 2
- S3: Step 3
- S4: Step 4
- S5: Step 5
- S6: Step 6
- S7: Step 7
- S8: optional step
- S2a: optional step
- S2b: optional step

## Claims

1. A secure transaction unit (TU2) for receiving transactions from another secure transaction unit (TU1) in an electronic payment transaction system (TS), the secure transaction unit (TU2) comprises:
means (301) for transmitting communication registration data to a remote connecting unit (CU) for registering the secure transaction unit (TU2) at the remote connecting unit (CU) via a first communication channel;
means (302) for transmitting a request for transaction to the other secure transaction unit (TU1) via a second communication channel, wherein the request for transaction comprises identification information;
means (303) for receiving information from the remote connecting unit (CU) for establishing a direct communication channel to the other secure transaction unit (TU1);
means (304) for receiving a transaction from the other transaction unit (TU1) via the direct communication channel.

2. The secure transaction unit (TU2) according to claim 1,
wherein the received information for establishing a direct communication channel includes a communication address of the other secure token transaction unit (TU1).

3. The secure transaction unit (TU2) according to claim 1 or 2, wherein the identification information comprising at least one or more of:
- a communication address of the remote connecting unit (CU), preferably information about the remote connecting unit (CU) to which secure transaction unit (TU2) transmits the communication registration data; and/or
- identification information identifying the secure transaction unit (TU2), preferably a unique transaction unit identifier, a name, a pseudonym and/or a key pair including a private and a public key; and/or
- information about the transaction, preferably a monetary value of the transaction to be received by the secure transaction unit (TU2); a transaction identifier; a signed unique transaction identifier; and/or the public key of the identification information identifying the secure transaction receipt unit (TU2); and/or
- a channel identifier of the direct communication channel.

4. The secure transaction unit (TU2) according to one of the preceding claims, wherein the direct communication channel is different from the second communication channel and/or wherein the first communication channel is different from the second communication channel and the direct communication channel.

5. The secure transaction unit (TU2) according to any one of the preceding claims, wherein the communication registration data being transmitted by the secure transaction unit (TU2) to the remote connecting unit (CU) comprises a communication address, preferably an IP-address, an online transaction unit address and/or a hardware transaction unit address of the secure transaction unit (TU2).

6. The secure transaction unit (TU2) according to any one of the preceding claims,
wherein the request for transaction is presented to the other secure transaction unit (TU1) as QR-code, barcode, or figure and/or
wherein the second communication channel comprises E-Mail, SMS, MMS, Instant Messenger or fax communication.

7. A secure transaction unit (TU1) for transmitting transactions to another secure transaction unit (TU2) in an electronic payment transaction system (TS), the secure transaction unit (TU1) comprises:
means (401) for receiving a request for transaction from the other secure transaction receipt unit (TU2) via a second communication channel, wherein the request for transaction comprises an identification information;
means (402) for transmitting communication registration data to the remote connecting unit (CU) for registering the secure transaction unit (TU1) at the remote connecting unit (CU);
means (403) for transmitting a request for initiating a connection between the secure transaction unit (TU1) and the other secure transaction unit (TU2) via a direct communication channel to the remote connecting unit (CU);
means (404) for receiving information from the remote connecting unit (CU) for establishing the direct communication channel to the other secure transaction unit (TU2);
means (405) for providing transaction to the other secure transaction unit (TU2) via the direct communication channel.

8. The secure transaction transmitting unit (TU1) according to claim 7, wherein the communication registration data being transmitted by the secure transaction unit (TU1) to the remote connecting unit (CU) comprises an address, preferably an IP-address and/or identification information identifying the secure transaction unit (TU1) and/or
wherein the received information from the remote connecting unit (CU) includes a communication address of the other secure token transaction unit (TU2).

9. The secure transaction unit (TU1) according to any one of the claims 7 or 8, wherein the request for initiating a connection comprises at least one or more of:
- identification information identifying the secure transaction unit (TU2), preferably a unique transaction unit identifier, a name, a pseudonym and/or a key pair including a private and a public key; and/or
- information about the transaction, preferably a monetary value of the transaction to be received by the secure transaction unit (TU2); a transaction identifier; a signed unique transaction identifier; and/or the public key of the identification information identifying the secure transaction receipt unit (TU2); and/or
- a channel identifier of the direct communication channel.

10. An electronic payment transaction system (TS) comprising:
one or more secure transaction units (TU2) according to claim 1;
one or more other secure transaction units (TU1) according to claim 8;
one or more remote connecting units (CU),
wherein each of the remote connecting units (CU) comprise:
means (511) for receiving communication registration data from the secure transaction unit (TU2);
means (512) for receiving communication registration data from the other secure transaction unit (TU1);
means (513) for receiving a request for initiating a connection between the other secure transaction unit (TU1) and the other secure transaction unit (TU2);
means (514) for providing information of the secure transaction unit (TU2) to the other secure transaction unit (TU1) and for providing information of the other secure transaction unit (TU1) to the secure transaction unit (TU2) for establishing a direct communication channel between the secure transaction unit (TU2) and the other secure transaction unit (TU1).

11. An electronic payment transaction system according to claim 10,
wherein the one or more remote connecting units (CU) comprise a rendezvous-server, and/or
when comprising more than one remote connecting units (CU), the request for transaction further comprises a communication address, preferably IP-address, of one remote connecting unit (CU) selected from the remote connecting units (CU), and/or wherein the communication address of the remote connecting unit (CU) is fix or variable.

12. Method for providing a transaction between another secure transaction unit (TU1), according to claim 7, to a secure transaction unit (TU2), according to claim 1, in an electronic payment transaction system (TS), the method comprises:
providing (S1) communication registration data from the secure transaction unit (TU2) to the remote connecting unit (CU) for registering the secure transaction unit (TU2) at the remote connecting unit (CU) via a first communication channel;
providing (S2) a request for transaction from the secure transaction unit (TU2) to the other secure transaction unit (TU1) via a second communication channel, wherein the request for transaction comprises an identification information;
when the other secure transaction unit (TU1) received the request for transaction from a secure transaction unit (TU2), providing (S3) communication registration data from the other secure transaction unit (TU1) to the remote connecting unit (CU) for registering the other secure transaction unit (TU1) at the remote connecting unit (CU) and providing (S4) a request for initiating a connection via a direct communication channel between the other secure transaction unit (TU1) and the secure transaction unit (TU2) from the other secure transaction unit (TU1) to the remote connecting unit (CU);
providing (S5) information of the secure transaction unit (TU2) to the other secure transaction unit (TU1) by the remote connecting unit (CU);
providing (S5) information of the other secure transaction unit (TU1) to the secure transaction unit (TU2) by the remote connecting unit (CU);
establishing (S6) a direct communication channel between the secure transaction unit (TU2) and the other secure transaction unit (TU1) based on the provided information by the remote connecting unit (CU); and
performing (S7) a transaction from the other secure transaction unit (TU1) to the secure transaction unit (TU2) via the established direct communication channel.

13. The method according to claim 12, further comprising:
when the remote connecting unit (CU) comprises more than one remote connecting unit (CU), selecting (S2a) one remote connecting unit (CU) of the remote connecting units (CU) by the secure transaction unit (TU2), transmitting the communication registration data of the secure transaction unit (TU2) to the selected remote connecting unit (CU), and providing a communication address of the selected remote connecting unit (CU) to the other secure transaction unit (TU1) with the request for transaction; and/ or
providing (S2b) the request for transaction as a QR-code, barcode, or figure, and/or when a loss of the direct communication channel is identified by the secure transaction unit (TU2) and/or the other secure transaction unit (TU1), providing again the request for initiating a connection from the other secure transaction unit (TU1) to the remote connecting unit (CU); providing again information of the secure transaction unit (TU2) to the other secure transaction unit (TU1) by the remote connecting unit (CU); providing again information of the other secure transaction unit (TU1) to the secure transaction unit (TU2) by the remote connecting unit (CU); establishing again the direct communication channel between the secure transaction unit (TU2) and the other secure transaction unit (TU1) based on the provided information by the remote connecting unit (CU); and providing again the transaction from the other secure transaction unit (TU1) to the secure transaction unit (TU2) via the direct communication channel.

14. The method according to any one of claims 12 or 13, further comprising:
verifying (S8) the established direct communication channel.

## Amended claims

### Amended claims in accordance with Rule 137(2) EPC.

1. A secure transaction unit (TU2) for receiving transactions from another secure transaction unit (TU1) in an electronic payment transaction system (TS), the secure transaction unit (TU2) comprises:
means (301) for transmitting communication registration data to a remote connecting unit (CU) for registering the secure transaction unit (TU2) at the remote connecting unit (CU) via a first communication channel;
means (302) for transmitting a request for transaction to the other secure transaction unit (TU1) via a second communication channel, wherein the request for transaction comprises identification information,
wherein the request for transaction triggers the other secure transaction unit (TU1) to transmit communication registration data to a remote connecting unit (CU) for registering the secure transaction unit (TU2) at the remote connecting unit (CU);
means (303) for receiving information from the remote connecting unit (CU) for establishing a direct communication channel to the other secure transaction unit (TU1);
means (304) for receiving a transaction from the other transaction unit (TU1) via the direct communication channel.

2. The secure transaction unit (TU2) according to claim 1,
wherein the received information for establishing a direct communication channel includes a communication address of the other secure transaction unit (TU1).

3. The secure transaction unit (TU2) according to claim 1 or 2, wherein the identification information comprising at least one or more of:
- a communication address of the remote connecting unit (CU), preferably information about the remote connecting unit (CU) to which secure transaction unit (TU2) transmits the communication registration data; and/or
- identification information identifying the secure transaction unit (TU2), preferably a unique transaction unit identifier, a name, a pseudonym and/or a key pair including a private and a public key; and/or
- information about the transaction, preferably a monetary value of the transaction to be received by the secure transaction unit (TU2); a transaction identifier; a signed unique transaction identifier; and/or the public key of the identification information identifying the secure transaction receipt unit (TU2); and/or
- a channel identifier of the direct communication channel.

4. The secure transaction unit (TU2) according to one of the preceding claims, wherein the direct communication channel is different from the second communication channel and/or wherein the first communication channel is different from the second communication channel and the direct communication channel.

5. The secure transaction unit (TU2) according to any one of the preceding claims, wherein the communication registration data being transmitted by the secure transaction unit (TU2) to the remote connecting unit (CU) comprises a communication address, preferably an IP-address, an online transaction unit address and/or a hardware transaction unit address of the secure transaction unit (TU2).

6. The secure transaction unit (TU2) according to any one of the preceding claims,
wherein the request for transaction is presented to the other secure transaction unit (TU1) as QR-code, barcode, or figure and/or
wherein the second communication channel comprises E-Mail, SMS, MMS, Instant Messenger or fax communication.

7. A secure transaction unit (TU1) for transmitting transactions to another secure transaction unit (TU2) in an electronic payment transaction system (TS), the secure transaction unit (TU1) comprises:
means (401) for receiving a request for transaction from the other secure transaction receipt unit (TU2) via a second communication channel, wherein the request for transaction comprises an identification information, wherein the request for transaction triggers the other secure transaction unit (TU1) to transmit communication registration data to a remote connecting unit (CU) for registering the secure transaction unit (TU2) at the remote connecting unit (CU);
means (402) for transmitting communication registration data to the remote connecting unit (CU) for registering the secure transaction unit (TU1) at the remote connecting unit (CU);
means (403) for transmitting a request for initiating a connection between the secure transaction unit (TU1) and the other secure transaction unit (TU2) via a direct communication channel to the remote connecting unit (CU);
means (404) for receiving information from the remote connecting unit (CU) for establishing the direct communication channel to the other secure transaction unit (TU2);
means (405) for providing transaction to the other secure transaction unit (TU2) via the direct communication channel.

8. The secure transaction transmitting unit (TU1) according to claim 7, wherein the communication registration data being transmitted by the secure transaction unit (TU1) to the remote connecting unit (CU) comprises an address, preferably an IP-address and/or identification information identifying the secure transaction unit (TU1) and/or
wherein the received information from the remote connecting unit (CU) includes a communication address of the other secure token transaction unit (TU2).

9. The secure transaction unit (TU1) according to any one of the claims 7 or 8, wherein the request for initiating a connection comprises at least one or more of:
- identification information identifying the secure transaction unit (TU2), preferably a unique transaction unit identifier, a name, a pseudonym and/or a key pair including a private and a public key; and/or
- information about the transaction, preferably a monetary value of the transaction to be received by the secure transaction unit (TU2); a transaction identifier; a signed unique transaction identifier; and/or the public key of the identification information identifying the secure transaction receipt unit (TU2); and/or
- a channel identifier of the direct communication channel.

10. An electronic payment transaction system (TS) comprising:
one or more secure transaction units (TU2) according to claim 1;
one or more other secure transaction units (TU1) according to claim 8;
one or more remote connecting units (CU),
wherein each of the remote connecting units (CU) comprise:
means (511) for receiving communication registration data from the secure transaction unit (TU2);
means (512) for receiving communication registration data from the other secure transaction unit (TU1);
means (513) for receiving a request for initiating a connection between the other secure transaction unit (TU1) and the other secure transaction unit (TU2);
means (514) for providing information of the secure transaction unit (TU2) to the other secure transaction unit (TU1) and for providing information of the other secure transaction unit (TU1) to the secure transaction unit (TU2) for establishing a direct communication channel between the secure transaction unit (TU2) and the other secure transaction unit (TU1).

11. An electronic payment transaction system according to claim 10,
wherein the one or more remote connecting units (CU) comprise a rendezvous-server, and/or
when comprising more than one remote connecting units (CU), the request for transaction further comprises a communication address, preferably IP-address, of one remote connecting unit (CU) selected from the remote connecting units (CU), and/or
wherein the communication address of the remote connecting unit (CU) is fix or variable.

12. Method for providing a transaction between another secure transaction unit (TU1), according to claim 7, to a secure transaction unit (TU2), according to claim 1, in an electronic payment transaction system (TS), the method comprises:
providing (S1) communication registration data from the secure transaction unit (TU2) to the remote connecting unit (CU) for registering the secure transaction unit (TU2) at the remote connecting unit (CU) via a first communication channel;
providing (S2) a request for transaction from the secure transaction unit (TU2) to the other secure transaction unit (TU1) via a second communication channel, wherein the request for transaction comprises an identification information;
when the other secure transaction unit (TU1) received the request for transaction from a secure transaction unit (TU2), providing (S3) communication registration data from the other secure transaction unit (TU1) to the remote connecting unit (CU) for registering the other secure transaction unit (TU1) at the remote connecting unit (CU) and providing (S4) a request for initiating a connection via a direct communication channel between the other secure transaction unit (TU1) and the secure transaction unit (TU2) from the other secure transaction unit (TU1) to the remote connecting unit (CU);
providing (S5) information of the secure transaction unit (TU2) to the other secure transaction unit (TU1) by the remote connecting unit (CU);
providing (S5) information of the other secure transaction unit (TU1) to the secure transaction unit (TU2) by the remote connecting unit (CU);
establishing (S6) a direct communication channel between the secure transaction unit (TU2) and the other secure transaction unit (TU1) based on the provided information by the remote connecting unit (CU); and
performing (S7) a transaction from the other secure transaction unit (TU1) to the secure transaction unit (TU2) via the established direct communication channel.

13. The method according to claim 12, further comprising:
when the remote connecting unit (CU) comprises more than one remote connecting unit (CU), selecting (S2a) one remote connecting unit (CU) of the remote connecting units (CU) by the secure transaction unit (TU2), transmitting the communication registration data of the secure transaction unit (TU2) to the selected remote connecting unit (CU), and providing a communication address of the selected remote connecting unit (CU) to the other secure transaction unit (TU1) with the request for transaction; and/or
providing (S2b) the request for transaction as a QR-code, barcode, or figure, and/or
when a loss of the direct communication channel is identified by the secure transaction unit (TU2) and/or the other secure transaction unit (TU1), providing again the request for initiating a connection from the other secure transaction unit (TU1) to the remote connecting unit (CU); providing again information of the secure transaction unit (TU2) to the other secure transaction unit (TU1) by the remote connecting unit (CU); providing again information of the other secure transaction unit (TU1) to the secure transaction unit (TU2) by the remote connecting unit (CU); establishing again the direct communication channel between the secure transaction unit (TU2) and the other secure transaction unit (TU1) based on the provided information by the remote connecting unit (CU); and providing again the transaction from the other secure transaction unit (TU1) to the secure transaction unit (TU2) via the direct communication channel.

14. The method according to any one of claims 12 or 13, further comprising: verifying (S8) the established direct communication channel.
